# EUROPEAN PATENT SPECIFICATION

(11) **EP 3 124 809 B1**
(45) Date of publication and mention of the grant of the patent: **29.01.2020**
(21) Application number: 15767895.4
(22) Date of filing: 24.03.2015
(51) Int. Cl.: F16C 11/04, F16F 9/516, F16F 9/16, A47K 13/12, E05F 3/04, E05F 3/20

(54) **DAMPING ROTATING-SHAFT MECHANISM WITH AUTO COMPENSATION**
DÄMPFENDER DREHSCHAFTMECHANISMUS MIT AUTOMATISCHER KOMPENSATION
MÉCANISME D'ARBRE ROTATIF D'AMORTISSEMENT À COMPENSATION AUTOMATIQUE

(30) Priority: 25.03.2014 CN 201410114089; 25.03.2014 CN 201420137851 U
(43) Date of publication of application: 01.02.2017
(73) Proprietor: Wang, Xiangji, Xiamen, Fujian 361028 (CN)
(72) Inventor: WANG, Xiangji, Xiamen Fujian 361028 (CN); ZHANG, Yuanhuai, Xiamen Fujian 361028 (CN); CHEN, Wencheng, Xiamen Fujian 361028 (CN); LIN, Yaohui, Xiamen Fujian 361028 (CN)
(74) Representative: Verscht, Thomas Kurt Albert
(86) International application number: PCT/CN2015/074930
(87) International publication number: WO 2015/144034

(56) References cited:
- EP-A1- 2 295 693
- CN-A- 103 527 700
- CN-Y- 2 688 964
- CN-Y- 201 033 049
- CN-Y- 201 033 049
- JP-A- 2010 084 866
- US-A1- 2013 276 268

## Description

### Field of the invention

The present invention relates to a damping spindle mechanism, especially to a damping spindle mechanism that can rotate easily in a direction and be damped to rotate in the reverse direction with self compensation function.

### Background of the invention

Rotation connectors are widely used in varies fields, for example, they can be used in toilet seat cover, fridge door, telephone flip cover and cabinet door, etc, when used in toilet seat cover, the rotation connector connects the toilet seat cover and the toilet main body, there is no resistance when the toilet seat cover is flipped up or put down, it may causes that the toilet seat cover punches the toilet main body so hard when the user puts the toilet seat cover down, therefore, it easily damages the connecting portion of the toilet seat cover and the main body, on the other hand, it may also damage the toilet seat cover or the main body. For that reason, there is a rotation connector with a damping spindle mechanism, the most important feature of the damping spindle mechanism is that, it uses blade to serve as a check valve, when the damping spindle mechanism is applied in the toilet seat cover, the toilet seat cover is assembled to the main body by the damping spindle mechanism, when the rotating shaft rotates in a direction, the blade closes the main passage of the damping oil, the damping oil can just flow through the clearance between two chamber bodies, therefore, the damping oil flows slowly from one chamber body to the other chamber body, so that the seat cover drops down slowly, when the rotating shaft rotates to the opposite direction, the blade doesn't close the main passage of the damping oil, the damping oil flows through the main passage and the gap between the components, therefore, the damping oil flows quickly from the other chamber body to the chamber body, the seat cover is open quickly.

With respect to the prior art attention is drawn to CN 201 033 049 Y from which a slow-falling mechanism of the panel turnover is known.

### Summary of the invention

The object of the present invention is to overcome the disadvantages of the existing known technology and to provide with a damping spindle mechanism with self compensation, with the self compensation, when the gap between the components is enlarged, it can automatically compensate the gap due to mechanical wear, thus making the damping spindle mechanism keep in a stable state in long period so as to lengthen the service life of the damping spindle mechanism.

The technical proposal of the present invention is that:
A damping spindle mechanism with self compensation, comprising a spindle, a sleeve, a housing and a blade; the sleeve is coupled to the spindle in thread way; an anti-rotation structure is disposed between the sleeve and the housing, when the spindle rotates, the sleeve moves forward and backward along the axis of the spindle in the housing; the housing is disposed with a chamber, one section of the spindle threaded with the sleeve is assembled in the chamber of the housing to form a closed chamber; the close chamber is filled with damping oil and is separated to a first chamber body and a second chamber body by the sleeve; the sleeve is disposed with a first passage connecting the two chamber bodies in the axial direction; wherein the blade is of ring shape or arc shape coupled to the internal wall surface of the housing, the blade is disposed with a deformable first thin wall, when the blade moves towards the second chamber body, the first thin wall deforms towards the internal wall surface of the housing.

The internal wall of the sleeve is coupled to the external wall of the spindle, the internal wall of one end of the sleeve near the second chamber body is disposed with a second thin wall of deformation, when the sleeve moves towards the second chamber body, the thin wall deforms towards the external wall surface of the spindle.

The blade is disposed with a first cavity adjacent to the first thin wall, the recess of the first cavity of the blade is faced to the second chamber body, so that when the blade moves towards the second chamber body, the recess of the first cavity opens the first thin wall outwards under the action of the damping oil.

The sleeve is disposed with a second cavity adjacent to the second thin wall, the recess of the second cavity of the sleeve is faced to the second chamber body, so that when the sleeve moves towards the second chamber body, the recess of the second cavity opens the second thin wall outwards under the action of the damping oil.

An oil passage is disposed in the blade or between the blade and the sleeve.

The blade comprises at least two arc single bodies, the single bodies surrounds to a circle or the single bodies and the convex body of the sleeve surround to a circle so as to couple to the internal wall surface of the housing in a ring shape.

The section of the single body is V shaped, U shaped, E shaped, T shaped, W shaped or C shaped.
the oil passage is a first through hole disposed in the blade along the axial direction. The oil passage is disposed between the blade and the sleeve, the oil passage comprises a gap disposed at one single body of the blade and a first groove disposed at the sleeve corresponding to the gap.

The oil passage is disposed between the blade and the sleeve, the oil passage comprises a through groove once formed at the at least one end of the single body of the blade and a fitting surface of the convex body of the sleeve, the fitting surface is an incline surface.

The first passage is a second groove once formed at the external wall of the sleeve in the axial direction of the spindle.

The first passage is a second through hole disposed at the sleeve in the axial direction of the spindle.

The anti-rotation structure comprises a first rib disposed at the external wall of the sleeve in the axial direction and a second rib disposed at the internal wall of the housing in the axial direction, the first rib and the second rib are mismatched.

A second passage is disposed between the first chamber body and the second chamber body to connect the two chamber bodies, the section of the second passage is reducing, so that the flow constant of the damping oil in the second passage changes.

The second passage is disposed between the sleeve and the spindle.

The spindle is disposed with a central spindle with reducing internal diameter, the internal diameter reducing central spindle and the sleeve surround to form the second passage, the internal diameter of the central spindle with reducing internal diameter is gradually increased from the end near the first chamber body to the other end near the second chamber body; or in other case, the spindle is disposed with a central spindle with saltation internal diameter, the central spindle with saltation internal diameter and the sleeve surround to from the second passage, the internal diameter of the central spindle with saltation internal diameter is suddenly increased from the end near the first chamber body to the other end near the second chamber body.

The central spindle of the spindle is disposed with a gradually changing first slot in the axial direction, the gradually changing first slot and the sleeve surround to form the second passage, the gradually changing first slot is gradually narrowed from the end near the first chamber body to the other end near the second chamber body; or in other case, the central spindle of the spindle is a gradient second slot in the axial direction, the gradient second slot and the sleeve surround to form the second passage, the gradient second slot is gradiently narrowed from the end near the first chamber body to the other end near the second chamber body.

The external thread of the spindle is disposed with gradually changing third slot in the thread direction, the gradually changing third slot and the sleeve surround to form the second passage, the gradually changing third slot is gradually narrowed in screw way from the end near the first chamber body to the other end near the second chamber body. The second passage is disposed between the sleeve and the housing.

The housing is disposed with a chamber body with internal diameter gradually changing, the chamber wall of the chamber body with internal diameter gradually changing and the sleeve surround to form the second passage, the internal diameter of the chamber body with internal diameter gradually changing is gradually narrowed from the end near the first chamber body to the other end near the second chamber body; or in other case, the housing is disposed with a chamber body with saltation internal diameter, the chamber wall of the chamber body with saltation internal diameter and the sleeve surround to form the second passage, the internal diameter of the chamber body with saltation internal diameter is suddenly decreased from the end near the first chamber body to the other end near the second chamber body.

The chamber wall of the chamber body of the housing is disposed with a gradually changing fourth slot in the axial direction, the gradually changing fourth slot and the sleeve surround to form the second passage, the gradually changing fourth slot is gradually narrowed from the end near the first chamber body to the other end near the second chamber body; or in other case, the chamber wall of the chamber body of the housing is disposed with a gradient fifth slot in the axial direction, the gradient fifth slot and the sleeve surround to form the second passage, the gradient fifth slot is gradiently narrowed from the end near the first chamber to the other end near the second chamber body.

The damping spindle mechanism with self compensation of the present invention plays self compensation via disposing thin walls structure in the sleeve and the blade, the thin walls of the blade and the sleeve are respectively coupled to the coupling surface of the housing and the spindle, under the action of pressure, the thin walls deforms slightly. When the spindle rotates, the spindle drives the sleeve and the blade to move forth and back by the screw mechanism, in damping state, the spindle rotates in a direction to drive the sleeve to move towards the second chamber body, the space of the second chamber body is gradually decreased, the pressure of the damping oil of the second chamber body is increased, at the same time, the space of the first chamber body is gradually increased, the pressure of the damping oil in the first chamber body is decreased, due to the pressure difference, the damping oil in the second chamber body moves to the first chamber body, the moving chamber body pushes the blade to the first passage, the blade closes the first passage, on the other hand, the damping oil with increasing oil pressure moves to the first cavity, the recess of the first cavity makes the first thin wall expanding outwardly under the action of the damping oil pressure, so that the first thin wall deforms towards the internal wall surface of the housing, so as to compensate the gap between the blade and the housing due to mechanical wear after long period, at the same way, the damping oil with increased oil pressure moves to the second cavity, the recess of the second cavity makes the second thin wall expanding outwardly under the action of the damping oil pressure, so that the second thin wall deforms towards the external wall surface of the spindle, so as to compensate the gap between the spindle and the sleeve due to mechanical wear after long period, therefore, the damping oil from the second chamber body to the first chamber body can only flow through the oil passage of the blade, or the oil passage between the blade and the sleeve, or the preset gap between the blade and the housing and/or the gap between the spindle and the sleeve, the damping oil can keep in a constant volume during long period's usage, that is to say, with the thin wall structure's deforming, it obtains self compensation. When the spindle rotates in the opposite direction, the sleeve moves towards the first chamber body, the space in the first chamber body is gradually decreased, the pressure of the damping oil in the first chamber body is increased, at the same time, the space of the second chamber body is gradually increased, the pressure of the damping oil in the second chamber body is decreased, due to the pressure difference, the damping oil of the first chamber body moves to the second chamber body, the moving damping oil pushes the blade away from the first passage, the first passage is open, the damping oil decompresses quickly, that is to say, the damping oil moves quickly from the first chamber body to the second chamber body, meanwhile, as the pressure of the damping oil of the first cavity and the second cavity is low, the self compensation structure doesn't act, therefore, no damping exists when the spindle rotates in the opposite direction. The blade moves forth and back at the sleeve, it serves as a check valve.

Compared to the existing known technology, the technical proposal of the present invention has advantages as follows:
1. as the present invention is provided that the blade is disposed with a deformable first thin wall, the sleeve is disposed with a deformable second thin wall, a first cavity is disposed adjacent to the first thin wall, a second cavity is disposed adjacent to the second thin wall, the recess of the first cavity and the second cavity have special direction, the first thin wall is coupled to the coupling surface of the housing, the second thin wall is coupled to the coupling surface of the spindle, the self compensation structure can makes the first thin wall deformed towards the internal wall surface of the housing and the second thin wall deformed towards the external wall surface of the spindle in damping state, so as to automatically compensate the gap due to mechanical wear, thus keeping the damping spindle mechanism in a stable state in long period so as to lengthen the service life of the damping spindle mechanism.
2. The present invention is provided that the blade is composed of at least two arc shaped single bodies, each single body and the convex body of the sleeve surround to a circle so as to couple to the internal wall surface of the housing in a ring shape, at least one end of at least one single body of the blade is once formed with a through groove, the through groove is coupled to the coupling surface of the convex body of the sleeve to form an oil passage, the coupling surface is inclined, so that when the blade closes the first passage, the section area of the oil passage is small, when the blade opens the first passage, the section area of the oil passage is larger, it thus efficiently ensures that the spindle mechanism rotates quickly in a direction and rotates slowly in the opposite direction.
3. The present invention is provided that a second passage is disposed to connect the two chamber bodies between the first chamber body and the second chamber body, as the section of the second passage changes, the flow rate of the damping oil in the second passage changes, with this structure, the spindle mechanism can be designed fast followed by slow during the slowly rotating by preset to achieve better effect.

The present invention will be further described with the drawings and the embodiments; but it should be noted that, the scope of the present invention is not limited to the embodiments.

### Brief description of the drawings

FIG.1 illustrates an exploded and schematic diagram of the first embodiment of the present invention.
FIG.2 illustrates a schematic diagram of the first embodiment of the present invention assembled to the toilet seat cover.
FIG.3 illustrates a sectional diagram of the first embodiment of the present invention when the toilet seat cover is totally flipped up;
FIG.4 illustrates a sectional diagram of the first embodiment of the present invention when the toilet seat cover is closing.
FIG.5 illustrates a sectional diagram of the first embodiment of the present invention when the toilet seat cover is totally closed.
FIG.6 illustrates a sectional diagram of the first embodiment of the present invention when the toilet seat cover is being flipped up.
FIG.7 illustrates a schematic diagram of the spindle of the first embodiment of the present invention.
FIG.8 illustrates a sectional diagram of the spindle of the first embodiment of the present invention.
FIG.9 illustrates a schematic diagram of the sleeve of the first embodiment of the present invention.
FIG.10 illustrates a sectional diagram of the sleeve of the first embodiment of the present invention.
FIG.11 illustrates a schematic diagram of the blade and sleeve when coupling to each other of the first embodiment of the present invention.
FIG.12 illustrates a sectional diagram of the blade and the sleeve when coupling to each other of the first embodiment of the present invention, the upper portion in the drawing illustrates the blade in open state, the lower portion in the drawing illustrates the blade in closed state.
FIG.13 illustrates a schematic diagram of the spindle of the second embodiment of the present invention.
FIG.14 illustrates a sectional diagram of the second embodiment of the present invention.
FIG.15 illustrates a schematic diagram of the spindle of the third embodiment of the present invention.
FIG.16 illustrates a sectional diagram of the spindle of the third embodiment of the present invention.
FIG.17 illustrates a schematic diagram of the spindle of the fourth embodiment of the present invention.
FIG.18 illustrates a sectional diagram of the spindle of the fourth embodiment of the present invention.
FGI.19 illustrates a schematic diagram of the spindle of the fifth embodiment of the present invention.
FIG.20 illustrates a sectional diagram of the housing of the sixth embodiment of the present invention.
FIG.21 illustrates a sectional diagram of the housing of the seventh embodiment of the present invention.
FIG.22 illustrates a schematic diagram of the housing of the eighth embodiment of the present invention.
FIG.23 illustrates a sectional diagram of the housing of the eighth embodiment of the present invention.
FIG.24 illustrates a schematic diagram of the housing of the ninth embodiment of the present invention.
FIG.25 illustrates a sectional diagram of the housing of the ninth embodiment of the present invention.
FIG.26 illustrates a schematic diagram of the sleeve of the tenth embodiment of the present invention.
FIG.27 illustrates a sectional diagram of the sleeve of the tenth embodiment of the present invention.
FIG.28 illustrates a schematic diagram of the blade of the eleventh embodiment of the present invention.
FIG.29 illustrates a sectional diagram of the blade of the eleventh embodiment of the present invention.
FIG.30 illustrates a schematic diagram of the blade and the sleeve when coupling to each other of the twelfth embodiment of the present invention.
FIG.31 illustrates a sectional diagram of the blade and the sleeve when coupling to each other of the twelfth embodiment of the present invention.

### Detailed description of the embodiments

### The first embodiment:

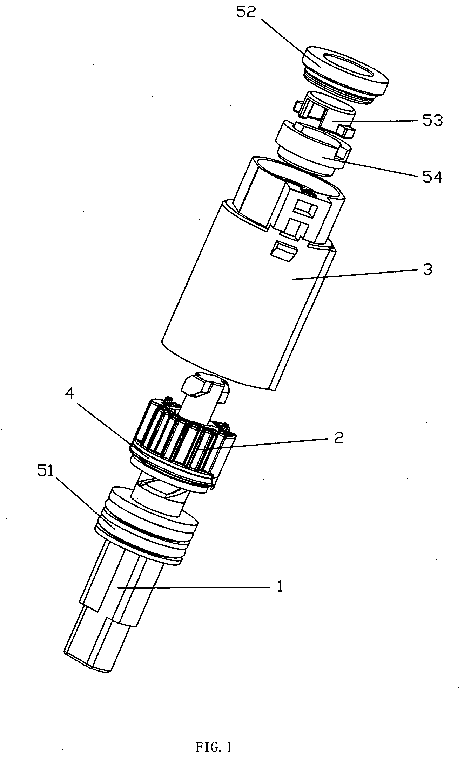

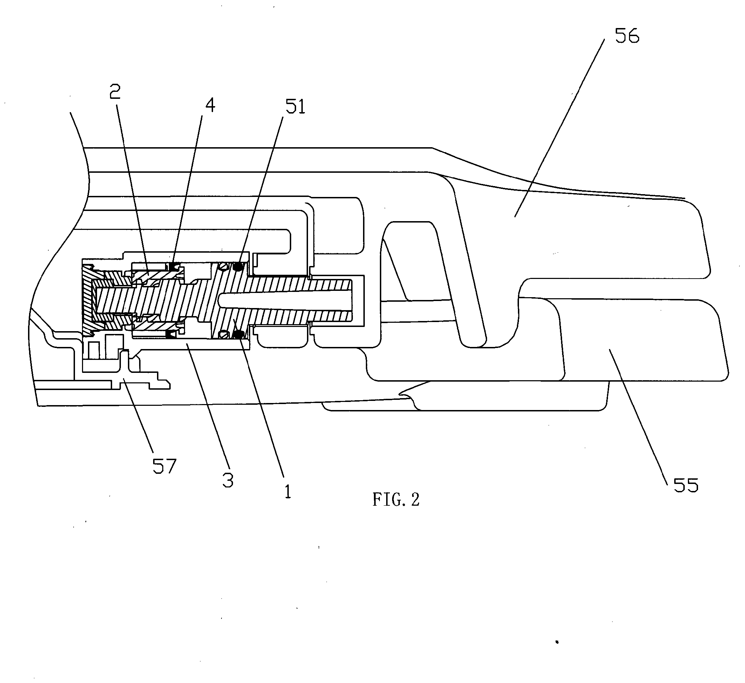

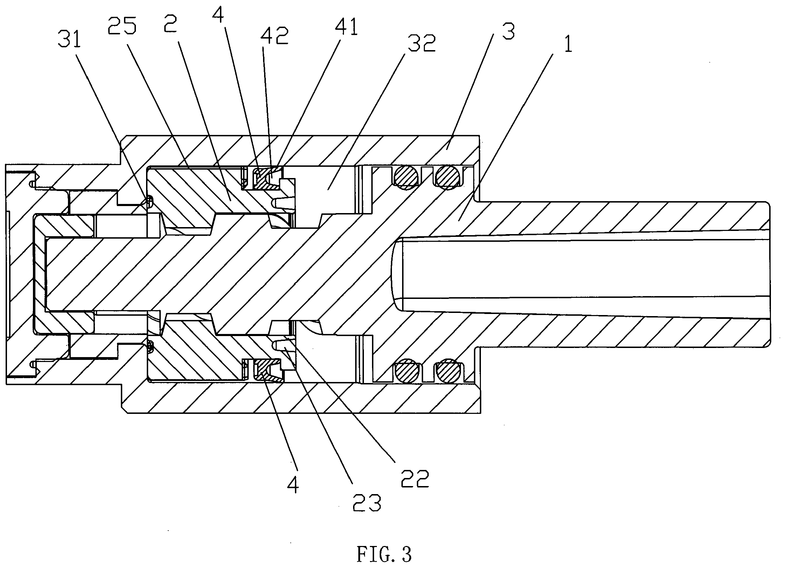

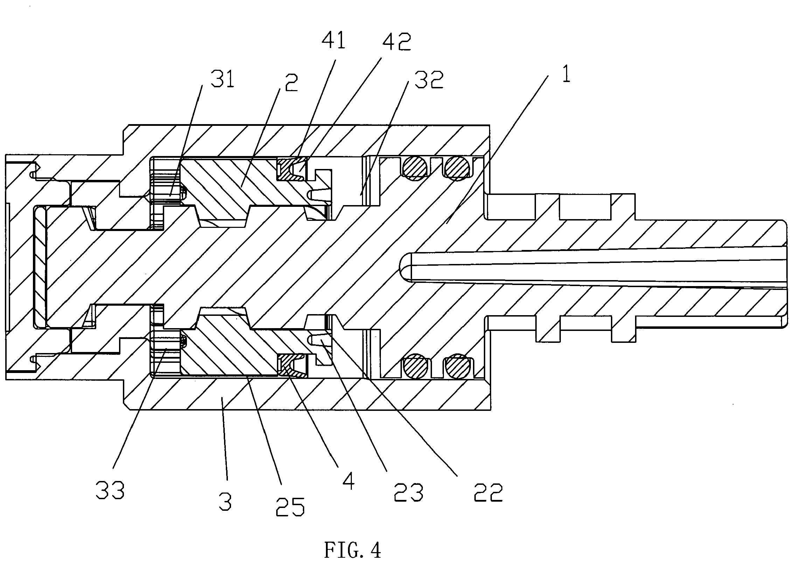

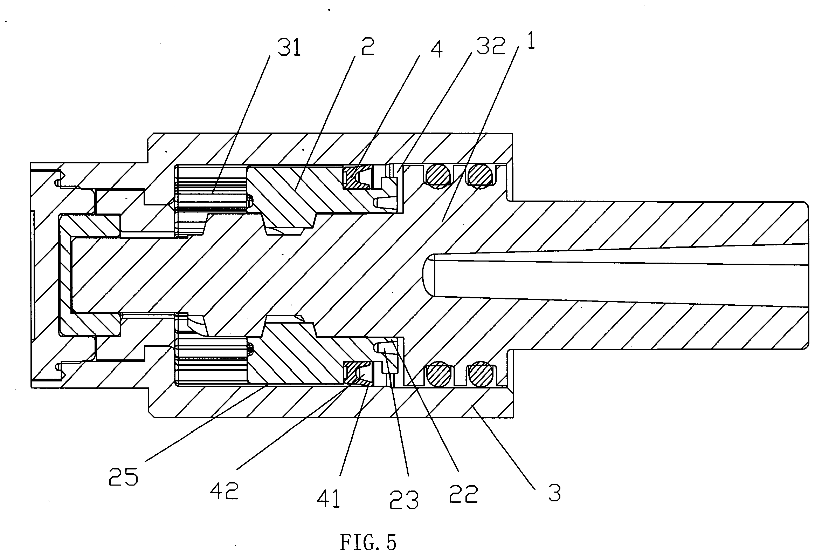

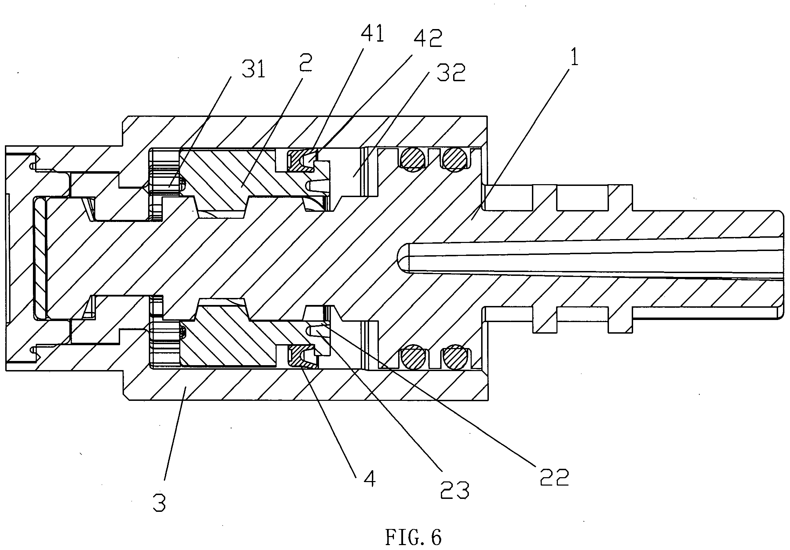

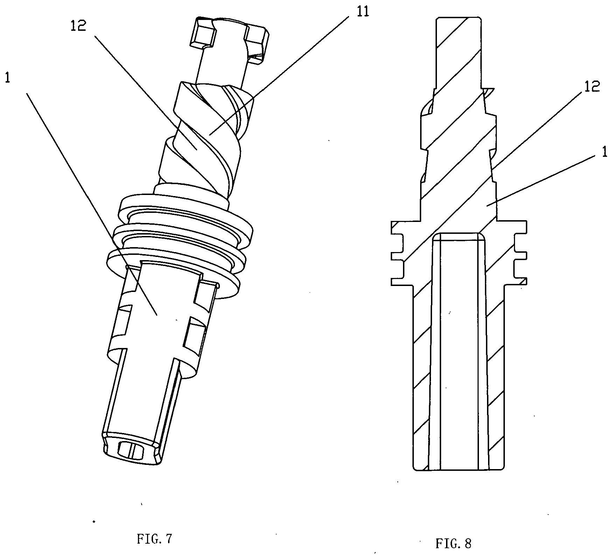

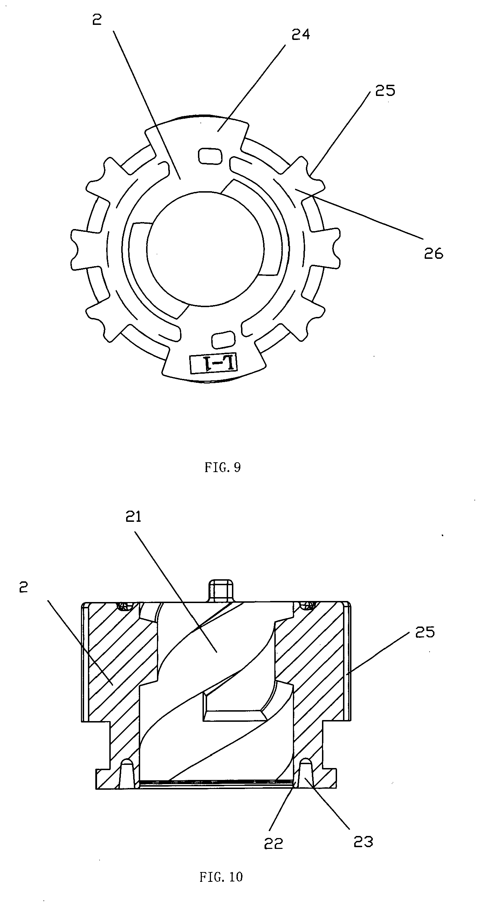

Referring to FIGs 1-12, the damping spindle mechanism with self compensation of the present invention comprises a spindle 1, a sleeve 2, a housing 3 and a blade 4; the sleeve 2 is coupled to the spindle 1 in thread way, that is to say, the spindle 1 is disposed with an external thread 11, the sleeve 2 is disposed with an internal thread 21; the housing 3 is disposed with a chamber, one section of the spindle 1 threaded to the sleeve 2 is assembled in the chamber of the housing and making the chamber a closed chamber, one end of the spindle 1 is inserted to the chamber of the housing 3, t a welding cover 52, a fixing block 53 and a fixing element 54 are used to support the end of the spindle 1 and also used to close one end of the chamber, the other end of the chamber is closed by a sealing ring 51, making the chamber of the housing a closed internal chamber; an anti-rotation structure is disposed between the sleeve 2 and the housing 3, when the spindle 1 rotates, the sleeve 2 moves forward and backward along the axis of the spindle in the housing 3; the closed chamber is filled with damping oil, the closed chamber is separated into a first chamber body 31 and a second chamber body 32 by the sleeve 2; the sleeve 2 is disposed with a first passage in the axial direction to connect the two chamber bodies; the blade 4 is movably assembled to the sleeve 2, it is disposed at the side of the first passage near the second chamber body, the first passage is closed and open by the blade gets closed to the first passage and gets away from the first passage; the blade 4 is ring shaped or arc shaped and coupled to the internal wall surface of the close chamber of the housing 3, the blade 4 is disposed with a deformable first thin wall 41, when the blade 4 moves towards the second chamber body 32, the first thin wall 41 expands towards the internal wall surface of the housing.

The internal wall of the sleeve 2 is coupled to the external wall of the spindle 1, the internal wall of the end of the sleeve 2 near the second chamber body is disposed with a deformable second thin wall 22, when the sleeve 2 moves towards the second chamber body 32, the second thin wall 22 deforms towards the external wall surface of the spindle 1.

The blade 4 is disposed with a first cavity 42 adjacent to the first thin wall 41 , the recess of the first cavity 42 of the blade 4 is faced to the second chamber body, so that when the blade 4 moves towards the second chamber body, the recess of the first cavity opens the first thin wall 41 outwards under the action of the damping oil.

The sleeve is disposed with a second cavity 23 adjacent to the second thin wall 22, the recess of the second cavity 23 of the sleeve is faced to the second chamber body, so that when the sleeve 2 moves towards the second chamber body, the recess of the second cavity 23 opens the second thin wall 22 outwards under the action of the damping oil. An oil passage is disposed in the blade or between the blade and the sleeve.

In this embodiment, the blade comprises two arc single bodies 40, the single bodies 40 surrounds to a circle, same as this embodiment, the sleeve 2 is disposed with two convex bodies 24, the two arc single bodies 40 and the two convex body 24 of the sleeve 2 surround to a circle so as to couple to the internal wall surface of the housing in a ring shape.

In this embodiment, the section of the single body is V shaped, as needed, it can be also U shaped, E shaped, T shaped, W shaped or C shaped, or it can be an integral whole.

The oil passage is disposed between the blade 4 and the sleeve 2, the oil passage comprises a through groove 43 once formed at the at least one end of the single body of the blade and a fitting surface 241 of the convex body 24 of the sleeve, the fitting surface 241 is an incline surface.

The first passage is a second groove 25 once formed at the external wall of the sleeve in the axial direction of the spindle.

The anti-rotation structure comprises a first rib 26 disposed at the external wall of the sleeve in the axial direction and a second rib 33 disposed at the internal wall of the housing in the axial direction, the first rib 26 and the second rib 33 are mismatched.

A second passage is disposed between the first chamber body 31 and the second chamber body 32 to connect the two chamber bodies, the section of the second passage is reducing, so that the flow constant of the damping oil in the second passage changes. The second passage is disposed between the sleeve and the spindle.

The spindle 1 is disposed with a central spindle 12 with reducing internal diameter, the internal diameter reducing central spindle 12 and the sleeve 2 surround to form the second passage, the internal diameter of the central spindle 12 with reducing internal diameter is gradually increased from the end near the first chamber body to the other end near the second chamber body.

The damping spindle mechanism with self compensation of the present invention is assembled between the toilet seat cover and the base 57, the toilet seat cover comprises a seatring 55 and an upper cover 56, the housing 3 of the present invention is fixed to the base 57, the spindle 1 of the present invention is fixed to the toilet seat cover.

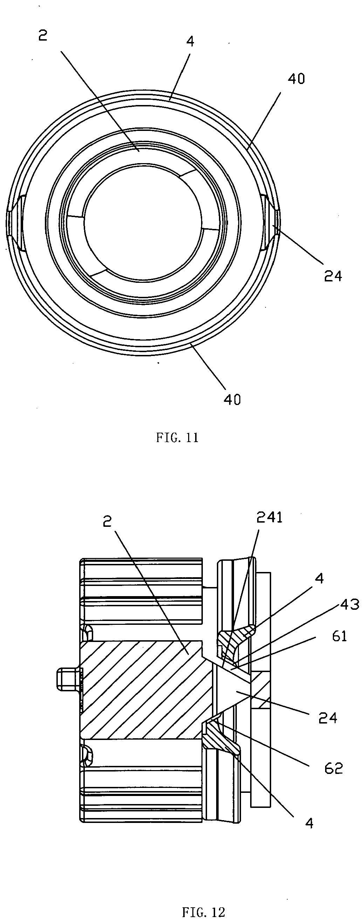

The damping spindle mechanism with self compensation of the present invention plays self compensation via disposing thin walls structure in the sleeve 2 and the blade 4, the thin walls of the blade 4 and the sleeve 2 are respectively coupled to the coupling surface of the housing and the spindle 1, under the action of pressure, the thin walls deforms slightly. When the spindle 1 rotates, the spindle 1 drives the sleeve 2 and the blade 4 to move forth and back by the screw mechanism, in dropping slowly state, the spindle 1 rotates in a direction to drive the sleeve 2 to move towards the second chamber body 32, the space of the second chamber body 32 is gradually decreased, the pressure of the damping oil of the second chamber body 32 is increased, at the same time, the space of the first chamber body 31 is gradually increased, the pressure of the damping oil in the first chamber body 31 is decreased, due to the pressure difference, the damping oil in the second chamber body 32 moves to the first chamber body 31, the moving chamber body pushes the blade 4 to the first passage (the port of one end of the second groove 25), the blade 4 closes the first passage, on the other hand, the damping oil with increasing oil pressure moves to the first cavity 42, the recess of the first cavity 42 makes the first thin wall 41 expanding outwardly under the action of the damping oil pressure, so that the first thin wall 41 deforms towards the internal wall surface of the housing, so as to compensate the gap between the blade 4 and the housing due to mechanical wear after long period, at the same way, the damping oil with increased oil pressure moves to the second cavity 23, the recess of the second cavity 23 makes the second thin wall 22 expanding outwardly under the action of the damping oil pressure, so that the second thin wall 22 deforms towards the thread surface of the spindle 1, so as to compensate the gap between the spindle 1 and the sleeve 2 due to mechanical wear after long period, therefore, the damping oil from the second chamber body 32 to the first chamber body 31 can only flow through the oil passage of the blade 4, or the oil passage between the blade 4 and the sleeve 2, or the preset gap between the blade 4 and the housing and/or the gap between the spindle 1 and the sleeve 2, the damping oil can keep in a constant volume during long period's usage, that is to say, with the thin wall structure's deforming, it obtains self compensation. When the spindle 1 rotates in the opposite direction, the sleeve 2 moves towards the first chamber body 31, the space in the first chamber body 31 is gradually decreased, the pressure of the damping oil in the first chamber body 31 is increased, at the same time, the space of the second chamber body 32 is gradually increased, the pressure of the damping oil in the second chamber body 32 is decreased, due to the pressure difference, the damping oil of the first chamber body 31 moves to the second chamber body 32, the moving damping oil pushes the blade 4 away from the first passage (the port of one end of the second groove 25), the first passage is open, the damping oil decompresses quickly, that is to say, the damping oil moves quickly from the first chamber body 31 to the second chamber body 32, meanwhile, as the pressure of the damping oil of the first cavity 42 and the second cavity 23 is low, the self compensation structure doesn't act, therefore, it can reduce the resistance when the seat cover is flipped up. The blade 4 moves forth and back at the sleeve 2, it serves as a check valve. The present invention is provided that the blade is composed oft two arc shaped single bodies, two single bodies 40 and the convex body 24 of the sleeve surround to a circle so as to couple to the internal wall surface of the housing in a ring shape, at least one end of at least one single body of the blade 4 is once formed with a through groove 43, the through groove 43 is coupled to the coupling surface 241 of the convex body 24 of the sleeve to form an oil passage, the coupling surface is inclined, so that when the blade 4 closes the first passage, the section area of the oil passage 61 is small, as figured in FIG.12, when the blade 4 opens the first passage, the section area of the oil passage 62 is larger, as figured in FIG.12, it thus efficiently ensures that the seat cover lifts up quickly and drops down slowly.

The damping spindle mechanism with self compensation of the present invention is provided that the second passage disposed between the first chamber body 31 and the second chamber body 32 is used to connect the two chamber bodies, the section of the second passage has changing diameter, so that the flow rate of the damping oil is changed in the second passage. The spindle 1 of the present invention is disposed with a central spindle 12 with reducing internal diameter, the internal diameter reducing central spindle 12 and the sleeve 2 surround to form the second passage, the internal diameter of the central spindle 12with reducing internal diameter is gradually increased from the end near the first chamber body to the other end near the second chamber body. So that the section area of the second passage is gradually narrowed from the end near to the first chamber body to the end near to the second chamber body, when the seat cover drops down at the beginning, it has the largest section area of the second passage, the damping oil in the second chamber body 32 flows quickly to the first chamber body 31, the resistance to the seat cover is weak, with the seat cover drops down, the section area of the second passage gradually decreases, the resistance to the seat cover gradually increases, at the end of the dropping of the seat cover, the resistance to the seat cover is the largest, it slows down the dropping of the seat cover with well effect.

### The second embodiment:

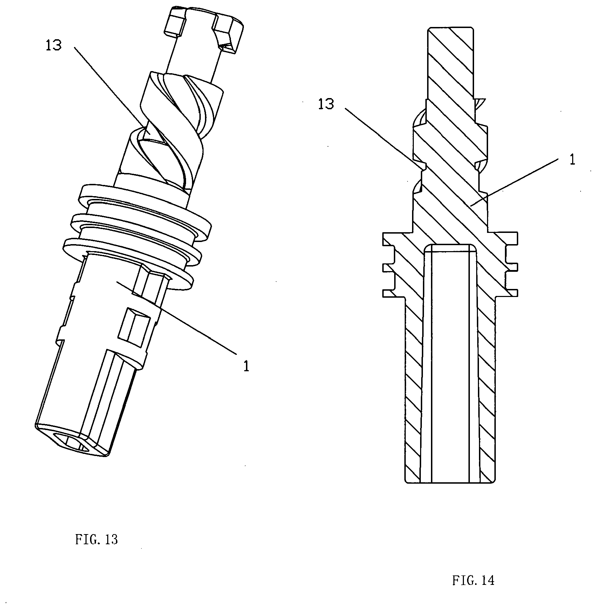

As figured in FIG.13 and FIG.14, the damping spindle mechanism with self compensation of this embodiment differs from the first embodiment in that: the spindle 1 is not applied with the central spindle with internal diameter gradually changed, but a central spindle 13 with saltation internal diameter, the central spindle 13 with saltation internal diameter and the sleeve 2 surround to from the second passage, the internal diameter of the central spindle 13 with saltation internal diameter is suddenly increased from the end near the first chamber body to the other end near the second chamber body.

### The third embodiment:

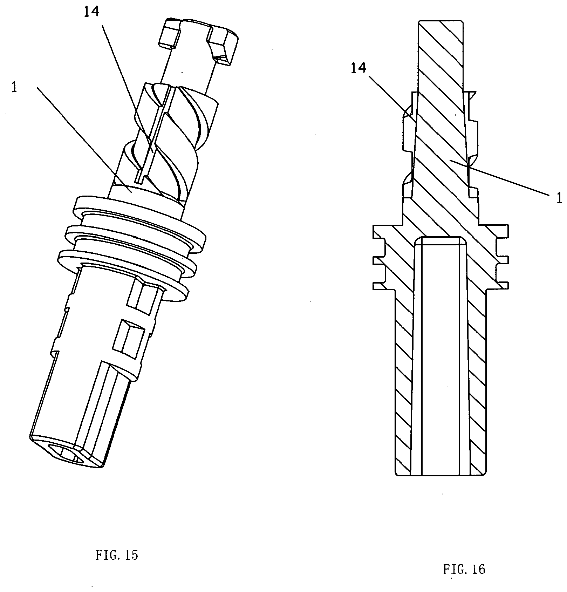

Referring to FIG.15 and FIG.16, the damping spindle mechanism with self compensation of this embodiment differs from the first embodiment in that: the spindle 1 is not applied with the central spindle with internal diameter gradually changed, but a gradually changing first slot 14 in the axial direction, the gradually changing first slot 14 and the sleeve 2 surround to form the second passage, the gradually changing first slot 14 is gradually narrowed from the end near the first chamber body to the other end near the second chamber body

### The fourth embodiment:

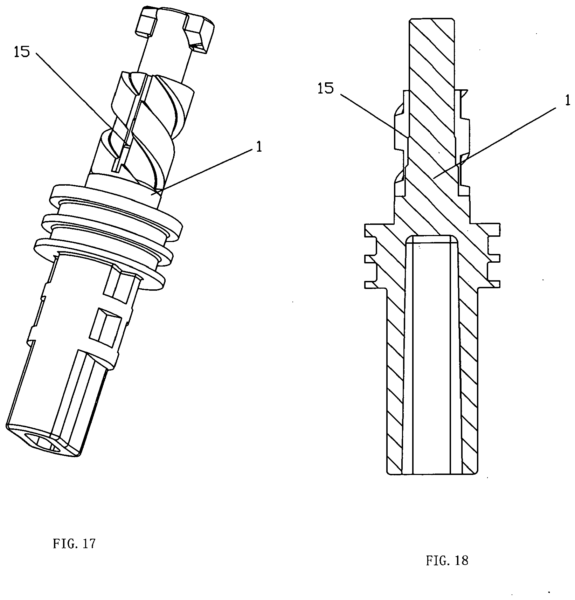

Referring to FIG.17 and FIG.18, the damping spindle mechanism with self compensation of this embodiment differs from the first embodiment in that: the spindle 1 is not applied with the central spindle with internal diameter gradually changed, but a gradient second slot 15 in the axial direction, the gradient second slot 15 and the sleeve surround to form the second passage, the gradient second slot 15 is gradiently narrowed from the end near the first chamber body to the other end near the second chamber body

### The fifth embodiment:

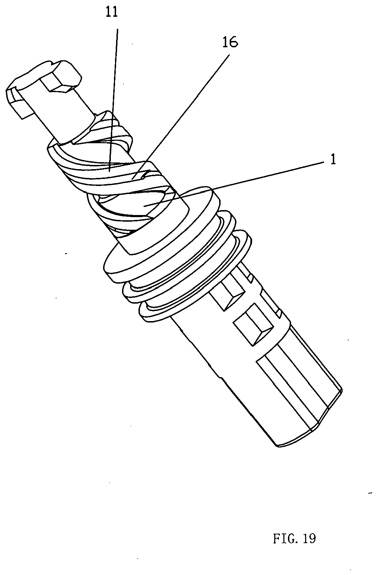

Referring to FIG.19, the damping spindle mechanism with self compensation of this embodiment differs from the first embodiment in that: the spindle 1 is not applied with the central spindle with internal diameter gradually changed, but not a spindle with internal diameter gradually changed, the external thread 11 of the spindle is disposed with gradually changing third slot 16 in the thread direction, the gradually changing third slot 16 and the sleeve 2 surround to form the second passage, the gradually changing third slot 16 is gradually narrowed in screw way from the end near the first chamber body to the other end near the second chamber body.

### The sixth embodiment:

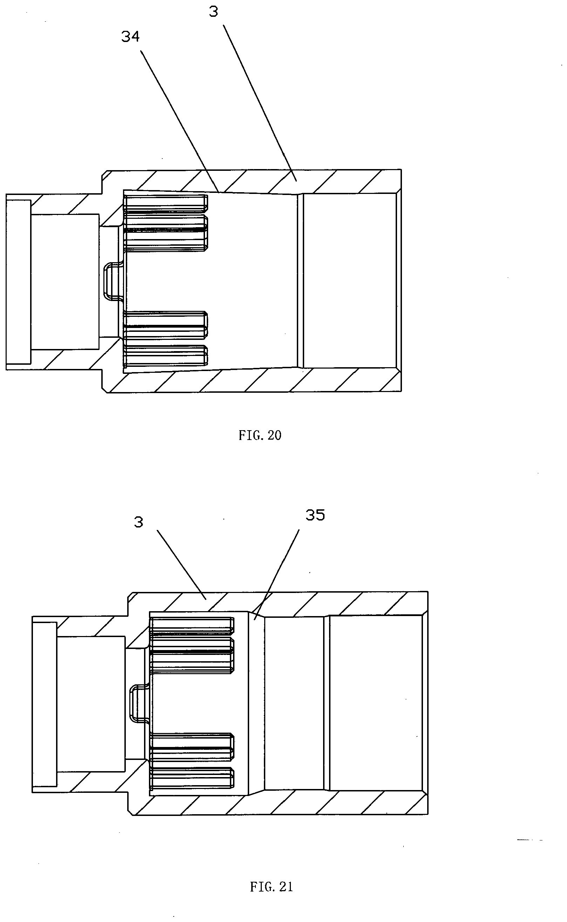

Referring to FIG.20, the damping spindle mechanism with self compensation of this embodiment differs from the first embodiment in that: another second passage is disposed between the sleeve and the housing, so that the structure of the housing is different from that of the first embodiment, the housing 3 is disposed with a chamber body 34 with internal diameter gradually changing, the chamber wall of the chamber body 34 with internal diameter gradually changing and the sleeve 2 surround to form the second passage, the internal diameter of the chamber body 34 with internal diameter gradually changing is gradually narrowed from the end near the first chamber body to the other end near the second chamber body. In this embodiment, there are two second passages, one is surrounded by the central spindle 12 with gradually changing internal diameter and the sleeve 2, the other one is surrounded by the chamber wall of the chamber body 34 with gradually changing internal diameter and the sleeve 2, it can be also disposed with only one second passage, such as the second passage surrounded by the chamber wall of the chamber body 34 with gradually changing internal diameter and the sleeve 2, therefore, the spindle has the internal diameter with same size.

### The seventh embodiment:

Referring to FIG.21, the damping spindle mechanism with self compensation of this embodiment differs from the sixth embodiment in that: the housing is not disposed with a chamber body with gradually changing internal diameter, but the housing 3 is disposed with a chamber body 35 with saltation internal diameter, the chamber wall of the chamber body 35 with saltation internal diameter and the sleeve 2 surround to form the second passage, the internal diameter of the chamber body 35 with saltation internal diameter is suddenly decreased from the end near the first chamber body to the other end near the second chamber body.

### The eighth embodiment:

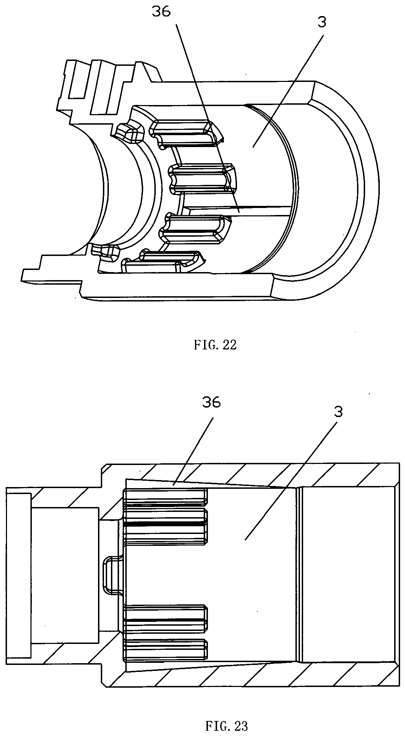

Referring to FIG.22 and FIG.23, the damping spindle mechanism with self compensation of this embodiment differs from the sixth embodiment in that: the housing is not disposed with a chamber body with gradually changing internal diameter, but the chamber wall of the chamber body of the housing 3 is disposed with a gradually changing fourth slot 36 in the axial direction, the gradually changing fourth slot 36 and the sleeve 2 surround to form the second passage, the gradually changing fourth slot 36 is gradually narrowed from the end near the first chamber body to the other end near the second chamber body

### The ninth embodiment:

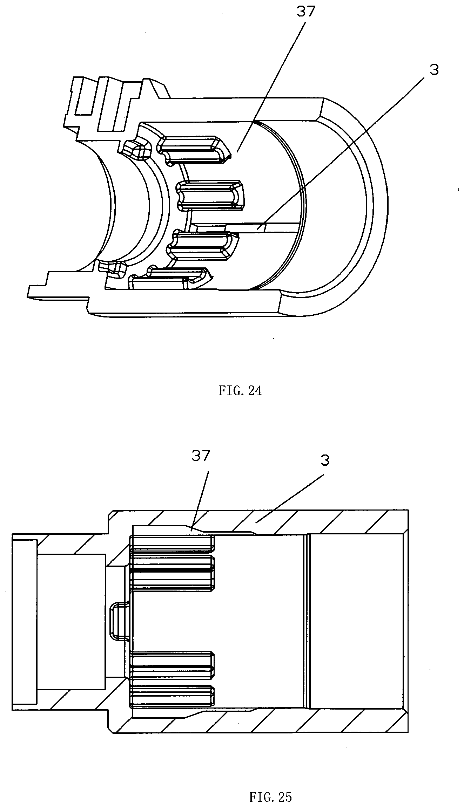

Referring to FIG.24 and FIG.25, the damping spindle mechanism with self compensation of this embodiment differs from the sixth embodiment in that: the housing is not disposed with a chamber body with gradually changing internal diameter, but the chamber wall of the chamber body of the housing 3 is disposed with a gradient fifth slot 37 in the axial direction, the gradient fifth slot 37 and the sleeve 2 surround to form the second passage, the gradient fifth slot 37 is gradiently narrowed from the end near the first chamber to the other end near the second chamber body.

### The tenth embodiment:

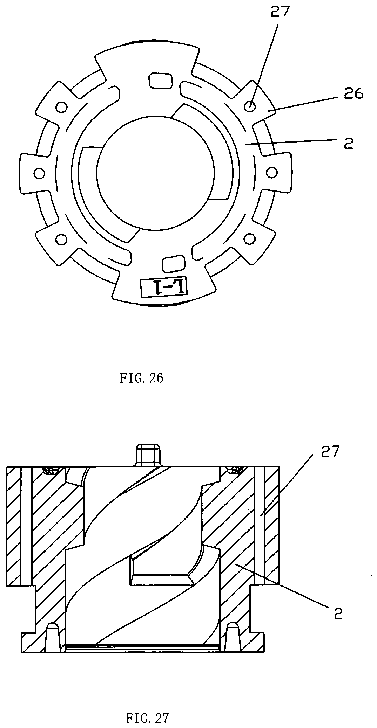

Referring to FIG.26 and FIG.27, the damping spindle mechanism with self compensation of this embodiment differs from the first embodiment in that: the first passage is a second through hole 27 disposed at the sleeve 2 in the axial direction of the spindle.

### The eleventh embodiment:

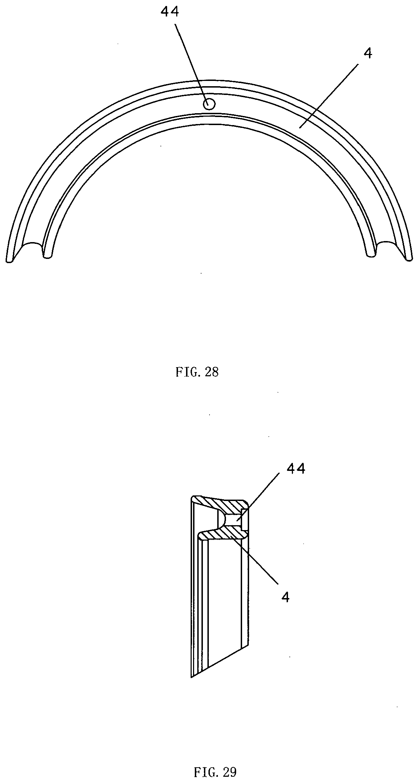

Referring to FIG.28 and FIG.29, the damping spindle mechanism with self compensation of this embodiment differs from the first embodiment in that: the oil passage is a first through hole 44 disposed in the blade along the axial direction.

### The twelfth embodiment:

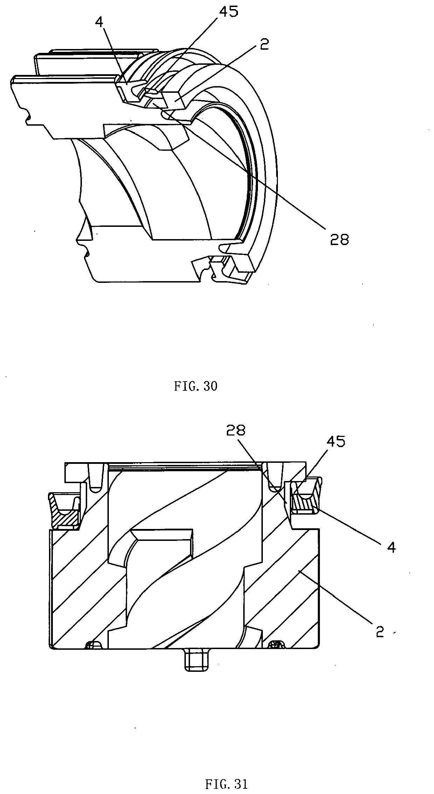

Referring to FIG.30 and FIG.31, the damping spindle mechanism with self compensation of this embodiment differs from the first embodiment in that: the oil passage is disposed between the blade and the sleeve, the oil passage comprises a gap 45 disposed at one single body of the blade 4 and a first groove 28 disposed at the sleeve corresponding to the gap.

As can be seen from above embodiments, the second passage can be independently disposed between the sleeve and the spindle, or between the sleeve and the housing; at the same way, the second passage can be disposed both between the sleeve and the spindle and between he sleeve and the housing, for example, the spindle has a central spindle with saltation internal diameter, the housing is applied with a chamber body with a gradually changing internal diameter; in another example, the central spindle of the spindle is disposed with an axial first a gradually changing first slot in the axial direction, the chamber wall of the chamber body of the housing is disposed with a gradient fifth slot in the axial direction; other combinations are available.

It should be noted that, the present invention can be applied widely, such as in the toilet seat cover, the fridge door, telephone flip cover, cabinet door and varies door/cover products, it can be also applied in a drawer, as the present invention is provided that the damping oil moves axially along the spindle, it has longer route than the case that the damping oil moves circumferentially along the spindle, therefore the rectilinear motion of the drawer is transformed to rotation of the spindle.

The invention may be summarized as follows:
1. A damping spindle mechanism with self compensation, comprising a spindle, a sleeve, a housing and a blade; the sleeve is coupled to the spindle in thread way; an anti-rotation structure is disposed between the sleeve and the housing, when the spindle rotates, the sleeve moves forward and backward along the axis of the spindle in the housing; the housing is disposed with a chamber, one section of the spindle threaded with the sleeve is assembled in the chamber of the housing to form a closed chamber; the close chamber is filled with damping oil and is separated to a first chamber body and a second chamber body by the sleeve; the sleeve is disposed with a first passage connecting the two chamber bodies in the axial direction; wherein the blade is of ring shape or arc shape coupled to the internal wall surface of the housing, the blade is disposed with a deformable first thin wall, when the blade moves towards the second chamber body, the first thin wall deforms towards the internal wall surface of the housing.
2. The damping spindle mechanism with self compensation according to item 1, wherein the internal wall of the sleeve is coupled to the external wall of the spindle, the internal wall of one end of the sleeve near the second chamber body is disposed with a second thin wall of deformation, when the sleeve moves towards the second chamber body, the thin wall deforms towards the external wall surface of the spindle.
3. The damping spindle mechanism with self compensation according to item 1 or item 2, wherein the blade is disposed with a first cavity adjacent to the first thin wall, the recess of the first cavity of the blade is faced to the second chamber body, so that when the blade moves towards the second chamber body, the recess of the first cavity opens the first thin wall outwards under the action of the damping oil,
4. The damping spindle mechanism with self compensation according to item 2, wherein the sleeve is disposed with a second cavity adjacent to the second thin wall, the recess of the second cavity of the sleeve is faced to the second chamber body, so that when the sleeve moves towards the second chamber body, the recess of the second cavity opens the second thin wall outwards under the action of the damping oil.
5. The damping spindle mechanism with self compensation according to item 1, wherein an oil passage is disposed in the blade or between the blade and the sleeve.
6. The damping spindle mechanism with self compensation according to item 5, wherein the blade comprises at least two arc single bodies, the single bodies surrounds to a circle or the single bodies and the convex body of the sleeve surround to a circle so as to couple to the internal wall surface of the housing in a ring shape.
7. The damping spindle mechanism with self compensation according to item 6, wherein the section of the single body is V shaped, U shaped, E shaped, T shaped, W shaped or C shaped.
8. The damping spindle mechanism with self compensation according to item 5, item 6 or item 7, wherein the oil passage is a first through hole disposed in the blade along the axial direction.
9. The damping spindle mechanism with self compensation according to item 6 or item 7, wherein the oil passage is disposed between the blade and the sleeve, the oil passage comprises a gap disposed at one single body of the blade and a first groove disposed at the sleeve corresponding to the gap.
10. The damping spindle mechanism with self compensation according to item 6 or item 7, wherein the oil passage is disposed between the blade and the sleeve, the oil passage comprises a through groove once formed at the at least one end of the single body of the blade and a fitting surface of the convex body of the sleeve, the fitting surface is an incline surface.
11. The damping spindle mechanism with self compensation according to item 1, wherein the first passage is a second groove once formed at the external wall of the sleeve in the axial direction of the spindle.
12. The damping spindle mechanism with self compensation according to item 1, wherein the first passage is a second through hole disposed at the sleeve in the axial direction of the spindle.
13. The damping spindle mechanism with self compensation according to item 1, wherein the anti-rotation structure comprises a first rib disposed at the external wall of the sleeve in the axial direction and a second rib disposed at the internal wall of the housing in the axial direction, the first rib and the second rib are mismatched.
14. The damping spindle mechanism with self compensation according to item 1, wherein a second passage is disposed between the first chamber body and the second chamber body to connect the two chamber bodies, the section of the second passage is reducing, so that the flow constant of the damping oil in the second passage changes.
15. The damping spindle mechanism with self compensation according to item 14, wherein the second passage is disposed between the sleeve and the spindle.
16. The damping spindle mechanism with self compensation according to item 15, wherein the spindle is disposed with a central spindle with reducing internal diameter, the internal diameter reducing central spindle and the sleeve surround to form the second passage, the internal diameter of the central spindle with reducing internal diameter is gradually increased from the end near the first chamber body to the other end near the second chamber body; or in other case, the spindle is disposed with a central spindle with saltation internal diameter, the central spindle with saltation internal diameter and the sleeve surround to from the second passage, the internal diameter of the central spindle with saltation internal diameter is suddenly increased from the end near the first chamber body to the other end near the second chamber body.
17. The damping spindle mechanism with self compensation according to item 15, wherein the central spindle of the spindle is disposed with a gradually changing first slot in the axial direction, the gradually changing first slot and the sleeve surround to form the second passage, the gradually changing first slot is gradually narrowed from the end near the first chamber body to the other end near the second chamber body; or in other case, the central spindle of the spindle is a gradient second slot in the axial direction, the gradient second slot and the sleeve surround to form the second passage, the gradient second slot is gradiently narrowed from the end near the first chamber body to the other end near the second chamber body.
18. The damping spindle mechanism with self compensation according to item 15, wherein the external thread of the spindle is disposed with gradually changing third slot in the thread direction, the gradually changing third slot and the sleeve surround to form the second passage, the gradually changing third slot is gradually narrowed in screw way from the end near the first chamber body to the other end near the second chamber body.
19. The damping spindle mechanism with self compensation according to item 14 or item 15, wherein the second passage is disposed between the sleeve and the housing.
20. The damping spindle mechanism with self compensation according to item 19, wherein the housing is disposed with a chamber body with internal diameter gradually changing, the chamber wall of the chamber body with internal diameter gradually changing and the sleeve surround to form the second passage, the internal diameter of the chamber body with internal diameter gradually changing is gradually narrowed from the end near the first chamber body to the other end near the second chamber body; or in other case, the housing is disposed with a chamber body with saltation internal diameter, the chamber wall of the chamber body with saltation internal diameter and the sleeve surround to form the second passage, the internal diameter of the chamber body with saltation internal diameter is suddenly decreased from the end near the first chamber body to the other end near the second chamber body.
21. The damping spindle mechanism with self compensation according to item 19, wherein the chamber wall of the chamber body of the housing is disposed with a gradually changing fourth slot in the axial direction, the gradually changing fourth slot and the sleeve surround to form the second passage, the gradually changing fourth slot is gradually narrowed from the end near the first chamber body to the other end near the second chamber body; or in other case, the chamber wall of the chamber body of the housing is disposed with a gradient fifth slot in the axial direction, the gradient fifth slot and the sleeve surround to form the second passage, the gradient fifth slot is gradiently narrowed from the end near the first chamber to the other end near the second chamber body.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

### Industrial applicability

The present invention is provided with a self compensation mechanism that the first thin wall of the blade deforms towards the internal wall surface of the housing and the second thin wall deforms towards the external wall surface of the spindle when damping is needed, so that it can self compensate the gap due to mechanical wear to make the damping spindle mechanism keep in a stable state in long period, thus lengthening the service life of the damping spindle mechanism.

## Claims

1. A damping spindle mechanism with self compensation, comprising a spindle (1), a sleeve (2), a housing (3) and a blade (4); the sleeve (2) is coupled to the spindle (1) in thread way; an anti-rotation structure is disposed between the sleeve (2) and the housing (3), when the spindle (1) rotates, the sleeve (2) moves forward and backward along the axis of the spindle (1) in the housing (3); the housing (3) is disposed with a chamber, one section of the spindle (1) threaded with the sleeve (2) is assembled in the chamber of the housing (3) to form a closed chamber; the closed chamber is filled with damping oil and is separated to a first chamber body (31) and a second chamber body (32) by the sleeve (2); the sleeve (2) is disposed with a first passage connecting the two chamber bodies in the axial direction; wherein the blade (4) is of ring shape or arc shape coupled to the internal wall surface of the housing (3), **characterised in that** the blade (4) is disposed with a
deformable first thin wall (41), when the blade (4) moves towards the second chamber body (32), the first thin wall (41) deforms towards the internal wall surface of the housing (3).

2. The damping spindle mechanism with self compensation according to claim 1, wherein the internal wall of the sleeve (2) is coupled to the external wall of the spindle (1), the internal wall of one end of the sleeve (2) near the second chamber body (32) is disposed with a second thin wall (22) of deformation, when the sleeve (2) moves towards the second chamber body (32), the thin wall deforms towards the external wall surface of the spindle (1).

3. The damping spindle mechanism with self compensation according to claim 1 or claim 2, wherein the blade (4) is disposed with a first cavity (42) adjacent to the first thin wall (41), the recess of the first cavity (42) of the blade (4) is faced to the second chamber body (32), so that when the blade (4) moves towards the second chamber body (32), the recess of the first cavity (42) opens the first thin wall (41) outwards under the action of the damping oil.

4. The damping spindle mechanism with self compensation according to claim 2, wherein the sleeve (2) is disposed with a second cavity (23) adjacent to the second thin wall (22), the recess of the second cavity (23) of the sleeve (2) is faced to the second chamber body (32), so that when the sleeve (2) moves towards the second chamber body (32), the recess of the second cavity (23) opens the second thin wall (22) outwards under the action of the damping oil.

5. The damping spindle mechanism with self compensation according to claim 1, wherein an oil passage is disposed in the blade (4) or between the blade (4) and the sleeve (2).

6. The damping spindle mechanism with self compensation according to claim 5, wherein the blade (4) comprises at least two arc single bodies (40), the single bodies (40) surround to a circle or the single bodies (40) and the convex body of the sleeve (2) surround to a circle so as to couple to the internal wall surface of the housing (3) in a ring shape.

7. The damping spindle mechanism with self compensation according to claim 6, wherein the section of the single body (40) is V shaped, U shaped, E shaped, T shaped, W shaped or C shaped.

8. The damping spindle mechanism with self compensation according to claim 5, claim 6 or claim 7, wherein the oil passage is a first through hole disposed in the blade (4) along the axial direction.

9. The damping spindle mechanism with self compensation according to claim 6 or claim 7, wherein the oil passage is disposed between the blade (4) and the sleeve (2), the oil passage comprises a gap disposed at one single body (40) of the blade (4) and a first groove disposed at the sleeve (2) corresponding to the gap; the oil passage is disposed between the blade (4) and the sleeve (2), the oil passage comprises a through groove (43) once formed at the at least one end of the single body (40) of the blade (4) and a fitting surface (241) of the convex body of the sleeve (2), the fitting surface is an inclined surface.

10. The damping spindle mechanism with self compensation according to claim 1, wherein the first passage is a second groove (25) once formed at the external wall of the sleeve (2) in the axial direction of the spindle (1); the first passage is a second through hole disposed at the sleeve (2) in the axial direction of the spindle (1).

11. The damping spindle mechanism with self compensation according to claim 1, wherein the anti-rotation structure comprises a first rib (26) disposed at the external wall of the sleeve (2) in the axial direction and a second rib (33) disposed at the internal wall of the housing (3) in the axial direction, the first rib (26) and the second rib (33) are mismatched.

12. The damping spindle mechanism with self compensation according to claim 1, wherein a second passage is disposed between the first chamber body (31) and the second chamber body (32) to connect the two chamber bodies (40), the section of the second passage is reducing, so that the flow constant of the damping oil in the second passage changes.

13. The damping spindle mechanism with self compensation according to claim 12, wherein the second passage is disposed between the sleeve (2) and the spindle (1).

14. The damping spindle mechanism with self compensation according to claim 13, wherein the spindle (1) is disposed with a central spindle with reducing internal diameter, the internal diameter reducing central spindle and the sleeve (2) surround to form the second passage, the internal diameter of the central spindle with reducing internal diameter is gradually increased from the end near the first chamber body (31) to the other end near the second chamber body (32); or in other case, the spindle (2) is disposed with a central spindle with saltation internal diameter, the central spindle with saltation internal diameter and the sleeve (2) surround to from the second passage, the internal diameter of the central spindle with saltation internal diameter is suddenly increased from the end near the first chamber body (31) to the other end near the second chamber body (32).

15. The damping spindle mechanism with self compensation according to claim 13, wherein the central spindle of the spindle (1) is disposed with a gradually changing first slot (14) in the axial direction, the gradually changing first slot (14) and the sleeve (2) surround to form the second passage, the gradually changing first slot (14) is gradually narrowed from the end near the first chamber body (31) to the other end near the second chamber body (32); or in other case, the central spindle of the spindle (1) is a gradient second slot (15) in the axial direction, the gradient second slot (15) and the sleeve (2) surround to form the second passage, the gradient second slot (15) is gradiently narrowed from the end near the first chamber body (31) to the other end near the second chamber body (32).

16. The damping spindle mechanism with self compensation according to claim 13, wherein the external thread of the spindle (1) is disposed with gradually changing third slot (16) in the thread direction, the gradually changing third slot (16) and the sleeve (2) surround to form the second passage, the gradually changing third slot (16) is gradually narrowed in screw way from the end near the first chamber body (31) to the other end near the second chamber body (32).

17. The damping spindle mechanism with self compensation according to claim 12 or claim 13, wherein the second passage is disposed between the sleeve (2) and the housing (3).

18. The damping spindle mechanism with self compensation according to claim 17, wherein the housing (3) is disposed with a chamber body with internal diameter gradually changing, the chamber wall of the chamber body with internal diameter gradually changing and the sleeve (2) surround to form the second passage, the internal diameter of the chamber body with internal diameter gradually changing is gradually narrowed from the end near the first chamber body (31) to the other end near the second chamber body (32); or in other case, the housing (3) is disposed with a chamber body with saltation internal diameter, the chamber wall of the chamber body with saltation internal diameter and the sleeve (2) surround to form the second passage, the internal diameter of the chamber body with saltation internal diameter is suddenly decreased from the end near the first chamber body (31) to the other end near the second chamber body (32).

19. The damping spindle mechanism with self compensation according to claim 17, wherein the chamber wall of the chamber body of the housing (3) is disposed with a gradually changing fourth slot (36) in the axial direction, the gradually changing fourth slot (36) and the sleeve surround to form the second passage, the gradually changing fourth slot (36) is gradually narrowed from the end near the first chamber body (31) to the other end near the second chamber body (32); or in other case, the chamber wall of the chamber body of the housing (3) is disposed with a gradient fifth slot (37) in the axial direction, the gradient fifth slot (37) and the sleeve (2) surround to form the second passage, the gradient fifth slot is gradiently narrowed from the end near the first chamber to the other end near the second chamber body (32).

## Patentansprüche

1. Ein Dämpfdrehschaftmechanismus mit Selbst-Kompensation, der einen Drehschaft (1), eine Hülse (2), ein Gehäuse (3) und eine Klinge (4) aufweist; die Hülse (2) ist mit dem Drehschaft (1) auf eine Gewindeart gekuppelt; eine Anti-Dreh-Struktur ist zwischen der Hülse (2) und dem Gehäuse (3) angeordnet, wenn sich der Drehschaft (1) dreht, bewegt sich die Hülse (2) nach vorne und nach hinten entlang der Achse des Drehschafts (1) in dem Gehäuse (3); das Gehäuse (3) ist mit einer Kammer angeordnet, ein Abschnitt des Drehschafts (1), gewindemäßig mit der Hülse (2) verbunden, ist in der Kammer des Gehäuses (3) zusammengebaut, um eine geschlossene Kammer zu bilden; die geschlossene Kammer ist mit Dämpföl gefüllt und durch die Hülse (2) in einen ersten Kammerkörper (31) und einen zweiten Kammerkörper (32) getrennt; die Hülse (2) ist mit einem ersten Durchlass angeordnet, welcher die zwei Kammerkörper in der axialen Richtung verbindet; wobei die Klinge (4) von einer Ringform oder einer Bogenform ist, und zwar gekuppelt an die Innenwandoberfläche des Gehäuses (3), **dadurch gekennzeichnet, dass** die Klinge (4) mit einer deformierbaren ersten dünnen Wand (41) angeordnet ist, wenn die Klinge (4) sich zu dem zweiten Kammerkörper (32) bewegt, deformiert sich die erste dünne Wand (41) zu der Innenwandoberfläche des Gehäuses (3) hin.

2. Der Dämpfdrehschaftmechanismus mit Selbst-Kompensation gemäß Anspruch 1, wobei die Innenwand der Hülse (2) mit der Außenwand des Drehschafts (1) gekuppelt ist, die Innenwand von einem Ende der Hülse (2) in der Nähe des zweiten Kammerkörpers (32) ist mit einer zweiten dünnen Wand (22) von einer Deformation angeordnet, wenn sich die Hülse (2) zu dem zweiten Kammerkörper (32) hin bewegt, deformiert sich die dünne Wand zu der Außenwandoberfläche des Drehschafts (1) hin.

3. Der Dämpfdrehschaftmechanismus mit Selbst-Kompensation gemäß Anspruch 1 oder Anspruch 2, wobei die Klinge (4) mit einem ersten Hohlraum (42) angeordnet, welcher zu der ersten dünnen Wand (41) anliegend ist, die Ausnehmung des ersten Hohlraums (42) der Klinge (4) weist zu dem zweiten Kammerkörper (32) hin, so dass, wenn sich die Klinge (4) zu dem zweiten Kammerkörper (32) hin bewegt, die Ausnehmung des ersten Hohlraums (42) die erste dünne Wand (42) nach außen unter der Wirkung des Dämpföls öffnet.

4. Der Dämpfdrehschaftmechanismus mit Selbst-Kompensation gemäß Anspruch 2, wobei die Hülse (2) mit einem zweiten Hohlraum (23) angeordnet ist, der zu der zweiten dünnen Wand (22) anliegend ist, die Ausnehmung des zweiten Hohlraums (23) der Hülse (2) weist zu dem zweiten Kammerkörper (32) hin, so dass, wenn sich die Hülse (2) zu dem zweiten Kammerkörper (32) hinbewegt, die Ausnehmung des zweiten Hohlraums (23) die zweite dünne Wand (22) nach außen unter der Wirkung des Dämpföls öffnet.

5. Der Dämpfdrehschaftmechanismus mit Selbst-Kompensation gemäß Anspruch 1, wobei ein Öldurchlass in der Klinge (4) oder zwischen der Klinge (4) und der Hülse (2) angeordnet ist.

6. Der Dämpfdrehschaftmechanismus mit Selbst-Kompensation gemäß Anspruch 5, wobei die Klinge (4) wenigstens zwei Bogen-Einzel-Körper (40) aufweist, die Einzel-Körper (40) umgeben zu einem Kreis oder die Einzel-Körper (40) und der konvexe Körper der Hülse (2) umgeben zu einem Kreis, um mit der Innenwandoberfläche des Gehäuses (3) in einer Ringform zu kuppeln.

7. Der Dämpfdrehschaftmechanismus mit Selbst-Kompensation gemäß Anspruch 6, wobei der Abschnitt des Einzel-Körpers (40) V-förmig, U-förmig, E-förmig, T-förmig, W-förmig oder C-förmig ist.

8. Der Dämpfdrehschaftmechanismus mit Selbst-Kompensation gemäß Anspruch 5, Anspruch 6 oder Anspruch 7, wobei der Öldurchlass ein erstes Durchgangsloch ist, das in der Klinge (4) entlang der axialen Richtung angeordnet ist.

9. Der Dämpfdrehschaftmechanismus mit Selbst-Kompensation gemäß Anspruch 6 oder Anspruch 7, wobei der Öldurchlass zwischen der Klinge (4) und der Hülse (2) angeordnet ist, der Öldurchlass einen Spalt, welcher an einem Einzel-Körper (40) der Klinge (4) angeordnet ist, und eine erste Nut, die an der Hülse (2), und zwar entsprechend dem Spalt, angeordnet ist, aufweist; der Öldurchlass ist zwischen der Klinge (4) und der Hülse (2) angeordnet, der Öldurchlass weist eine Durchgangsnut (43), und zwar einmal gebildet an dem wenigstens einem Ende des Einzel-Körpers (40) der Klinge (4), und eine Passoberfläche (241) des konvexen Körpers der Hülse (2) auf, die Passoberfläche ist eine geneigte Oberfläche.

10. Der Dämpfdrehschaftmechanismus mit Selbst-Kompensation gemäß Anspruch 1, wobei der erste Durchlass eine zweite Nut (25) ist, die einmal an der Außenwand der Hülse (2) in der axialen Richtung des Drehschafts (1) gebildet ist; der erste Durchlass ist ein zweites Durchgangsloch, das an der Hülse (2) in der axialen Richtung des Drehschafts (1) angeordnet ist.

11. Der Dämpfdrehschaftmechanismus mit Selbst-Kompensation gemäß Anspruch 1, wobei die Anti-Dreh-Struktur eine erste Rippe (26), die an der Außenwand der Hülse (2) in der axialen Richtung angeordnet ist, und eine zweite Rippe (33), die an der Innenwand des Gehäuses (3) in der axialen Richtung angeordnet ist, aufweist, die erste Rippe (26) und die zweite Rippe (33) sind fehlangepasst.

12. Der Dämpfdrehschaftmechanismus mit Selbst-Kompensation gemäß Anspruch 1, wobei ein zweiter Durchlass zwischen dem ersten Kammerkörper (31) und dem zweiten Kammerkörper (32) angeordnet ist, um die zwei Kammerkörper (40) zu verbinden, wobei der Abschnitt des zweiten Durchlasses sich verkleinert, so dass sich die Strömungskonstante des Dämpföls in dem zweiten Durchlass verändert.

13. Der Dämpfdrehschaftmechanismus mit Selbst-Kompensation gemäß Anspruch 12, wobei der zweite Durchlass zwischen der Hülse (2) und dem Drehschaft (1) angeordnet ist.

14. Der Dämpfdrehschaftmechanismus mit Selbst-Kompensation gemäß Anspruch 13, wobei der Drehschaft (1) mit einem zentralen Drehschaft mit sich verkleinernden Innendurchmesser angeordnet ist, der zentrale Drehschaft mit sich verkleinernden Innendurchmesser und die Hülse (2) umgeben, um den zweiten Durchlass zu bilden, der Innendurchmesser des zentralen Drehschafts mit sich verkleinerndem Innendurchmesser wird allmählich von dem Ende in der Nähe des ersten Kammerkörpers (31) zu dem anderen Ende in der Nähe des zweiten Kammerkörpers (32) erhöht; oder im anderen Fall, der Drehschaft (2) ist mit einem zentralen Drehschaft mit Sprung-Innendurchmesser angeordnet, der zentrale Drehschaft mit Sprung-Innendurchmesser und die Hülse (2) umgeben, um den zweiten Durchlass zu bilden, der Innendurchmesser des zentralen Drehschafts mit Sprung-Innendurchmesser wird plötzlich von dem Ende in der Nähe des ersten Kammerkörpers (31) zu dem anderen Ende in der Nähe des zweiten Kammerkörpers (32) erhöht.

15. Der Dämpfdrehschaftmechanismus mit Selbst-Kompensation gemäß Anspruch 13, wobei der zentrale Drehschaft des Drehschafts (1) mit einem sich allmählich ändernden ersten Schlitz (14) in der axialen Richtung angeordnet ist, der sich allmählich ändernde erste Schlitz (14) und die Hülse (2) umgeben, um den zweiten Durchlass zu bilden, der sich allmählich ändernde erste Schlitz (14) wird allmählich von dem Ende in der Nähe des ersten Kammerkörpers (31) zu dem anderen Ende in der Nähe des zweiten Kammerkörpers (32) verengt; oder im anderen Fall, der zentrale Drehschaft des Drehschafts (1) ist ein gradientartiger zweiter Schlitz (15) in der axialen Richtung, der gradientartige zweite Schlitz (15) und die Hülse (2) umgeben, um den zweiten Durchlass zu bilden, der gradientartige zweite Schlitz (15) wird grandientartig von dem Ende in der Nähe des ersten Kammerkörpers (31) zu dem anderen Ende in der Nähe des zweiten Kammerkörpers (32) verengt.

16. Der Dämpfdrehschaftmechanismus mit Selbst-Kompensation gemäß Anspruch 13, wobei das Außengewinde des Drehschafts (1) mit einem sich allmählich ändernden dritten Schlitz (16) in der Gewinderichtung angeordnet ist, der sich allmählich ändernde dritte Schlitz (16) und die Hülse (2) umgeben, um den zweiten Durchlass zu bilden, der sich allmählich ändernde dritte Schlitz (16) wird allmählich in einer Schraubenart von dem Ende in der Nähe des ersten Kammerkörpers (31) zu dem anderen Ende in der Nähe des zweiten Kammerkörpers (32) verengt.

17. Der Dämpfdrehschaftmechanismus mit Selbst-Kompensation gemäß Anspruch 12 oder Anspruch 13, wobei der zweite Durchlass zwischen der Hülse (2) und dem Gehäuse (3) angeordnet ist.

18. Der Dämpfdrehschaftmechanismus mit Selbst-Kompensation gemäß Anspruch 17, wobei das Gehäuse (3) mit einem Kammerkörper mit einem sich allmählich ändernden Innendurchmesser angeordnet ist, die Kammerwand des Kammerkörpers mit sich allmählich ändernden Innendurchmesser und die Hülse (2) umgeben, um den zweiten Durchlass zu bilden, der Innendurchmesser des Kammerkörpers mit sich allmählich ändernden Innendurchmesser wird allmählich von dem Ende in der Nähe des ersten Kammerkörpers (31) zu dem anderen Ende in der Nähe des zweiten Kammerkörpers (32) verengt; oder im anderen Fall, das Gehäuse (3) ist mit einem Kammerkörper mit Sprung-Innendurchmesser angeordnet, die Kammerwand des Kammerkörpers mit Sprung-Innendurchmesser und die Hülse (2) umgeben, um den zweiten Durchlass zu bilden, der Innendurchmesser des Kammerkörpers mit Sprung-Innendurchmesser wird plötzlich von dem Ende in der Nähe des ersten Kammerkörpers (31) zu dem anderen Ende in der Nähe des zweiten Kammerkörpers (32) verringert.

19. Der Dämpfdrehschaftmechanismus mit Selbst-Kompensation gemäß Anspruch 17, wobei die Kammerwand des Kammerkörpers des Gehäuses (3) mit einem sich allmählich ändernden vierten Schlitz (36) in der axialen Richtung angeordnet ist, der sich allmählich ändernde vierte Schlitz (36) und die Hülse umgeben, um den zweiten Durchlass zu bilden, der sich allmählich ändernde vierte Schlitz (36) wird allmählich von dem Ende in der Nähe des ersten Kammerkörpers (31) zu dem anderen Ende in der Nähe des zweiten Kammerkörpers (32) verengt; oder im anderen Fall, die Kammerwand des Kammerkörpers des Gehäuses (3) ist mit einem grandientartigen fünften Schlitz (37) in der axialen Richtung angeordnet, der gradientartige fünfte Schlitz (37) und die Hülse (2) umgeben, um den zweiten Durchlass zu bilden, der gradientartige fünfte Schlitz ist gradientartig von dem Ende in der Nähe der ersten Kammer zu dem anderen Ende in der Nähe des zweiten Kammerkörpers (32) verengt.

## Revendications

1. Mécanisme à tige d'amortissement à compensation automatique, comprenant une tige (1), un manchon (2), un boîtier (3) et une lame (4) ; le manchon (2) est couplé à la tige (1) par filetage ; une structure anti-rotation est disposée entre le manchon (2) et le boîtier (3), quand la tige (1) tourne, le manchon (2) avance et recule le long de l'axe de la tige (1) dans le boîtier (3) ; le boîtier (3) est pourvu d'une chambre, une section de la tige (1) vissée au manchon (2) est assemblée dans la chambre du boîtier (3) pour former une chambre fermée ; la chambre fermée est remplie avec de l'huile d'amortissement et est divisée en un premier corps de chambre (31) et un deuxième corps de chambre (32) par le manchon (2) ; le manchon (2) est pourvu d'un premier passage reliant les deux corps de chambre dans la direction axiale ; dans lequel la lame (4) a une forme de bague ou une forme d'arc couplée à la surface de paroi interne du boîtier (3), **caractérisé en ce que** la lame (4) est pourvue d'une première paroi mince déformable (41), quand la lame (4) se déplace vers le deuxième corps de chambre (32), la première paroi mince (41) se déforme vers la surface de paroi interne du boîtier (3).

2. Mécanisme à tige d'amortissement à compensation automatique selon la revendication 1, dans lequel la paroi interne du manchon (2) est couplée à la paroi externe de la tige (1), la paroi interne d'une extrémité du manchon (2) proche du deuxième corps de chambre (32) est pourvue d'une deuxième paroi mince (22) de déformation, quand le manchon (2) se déplace vers le deuxième corps de chambre (32), la paroi mince se déforme vers la surface de paroi externe de la tige (1).

3. Mécanisme à tige d'amortissement à compensation automatique selon la revendication 1 ou la revendication 2, dans lequel la lame (4) est pourvue d'une première cavité (42) adjacente à la première paroi mince (41), le creux de la première cavité (42) de la lame (4) fait face au deuxième corps de chambre (32), de sorte que lorsque la lame (4) se déplace vers le deuxième corps de chambre (32), le creux de la première cavité (42) ouvre la première paroi mince (41) vers l'extérieur sous l'action de l'huile d'amortissement.

4. Mécanisme à tige d'amortissement à compensation automatique selon la revendication 2, dans lequel le manchon (2) est pourvu d'une deuxième cavité (23) adjacente à la deuxième paroi mince (22), le creux de la deuxième cavité (23) du manchon (2) fait face au deuxième corps de chambre (32), de sorte que lorsque le manchon (2) se déplace vers le deuxième corps de chambre (32), le creux de la deuxième cavité (23) ouvre la deuxième paroi mince (22) vers l'extérieur sous l'action de l'huile d'amortissement.

5. Mécanisme à tige d'amortissement à compensation automatique selon la revendication 1, dans lequel un passage d'huile est disposé dans la lame (4) ou entre la lame (4) et le manchon (2).

6. Mécanisme à tige d'amortissement à compensation automatique selon la revendication 5, dans lequel la lame (4) comprend au moins deux corps simples arqués (40), les corps simples (40) entourent et forment un cercle ou les corps simples (40) et le corps convexe du manchon (2) entourent et forment un cercle de manière à se coupler à la surface de paroi interne du boîtier (3) suivant une forme annulaire.

7. Mécanisme à tige d'amortissement à compensation automatique selon la revendication 6, dans lequel la section du corps simple (40) est en forme de V, en forme de U, en forme de E, en forme de T, en forme de W ou en forme de C

8. Mécanisme à tige d'amortissement à compensation automatique selon la revendication 5, la revendication 6 ou la revendication 7, dans lequel le passage d'huile est un premier trou traversant disposé dans la lame (4) le long de la direction axiale.

9. Mécanisme à tige d'amortissement à compensation automatique selon la revendication 6 ou la revendication 7, dans lequel le passage d'huile est disposé entre la lame (4) et le manchon (2), le passage d'huile comprend un espace disposé sur un corps simple (40) de la lame (4) et une première rainure disposée sur le manchon (2) correspondant à l'espace ; le passage d'huile est disposé entre la lame (4) et le manchon (2), le passage d'huile comprend une rainure traversante (43) formée une fois sur la au moins une extrémité du corps simple (40) de la lame (4) et une surface d'ajustement (241) du corps convexe du manchon (2), la surface d'ajustement est une surface inclinée.

10. Mécanisme à tige d'amortissement à compensation automatique selon la revendication 1, dans lequel le premier passage est une deuxième rainure (25) formée une fois sur la paroi externe du manchon (2) dans la direction axiale de la tige (1) ; le premier passage est un deuxième trou traversant disposé sur le manchon (2) dans la direction axiale de la tige (1).

11. Mécanisme à tige d'amortissement à compensation automatique selon la revendication 1, dans lequel la structure anti-rotation comprend une première nervure (26) disposée sur la paroi externe du manchon (2) dans la direction axiale et une deuxième nervure (33) disposée sur la paroi interne du boîtier (3) dans la direction axiale, la première nervure (26) et la deuxième nervure (33) sont désaxées.

12. Mécanisme à tige d'amortissement à compensation automatique selon la revendication 1, dans lequel un deuxième passage est disposé entre le premier corps de chambre (31) et le deuxième corps de chambre (32) pour relier les deux corps de chambre (40), la section du deuxième passage diminue, de sorte que la constante d'écoulement de l'huile d'amortissement dans le deuxième passage change.

13. Mécanisme à tige d'amortissement à compensation automatique selon la revendication 12, dans lequel le deuxième passage est disposé entre le manchon (2) et la tige (1).

14. Mécanisme à tige d'amortissement à compensation automatique selon la revendication 13, dans lequel la tige (1) est pourvue d'une tige centrale avec un diamètre interne qui diminue, la tige centrale à réduction de diamètre interne et le manchon (2) entourent et forment le deuxième passage, le diamètre interne de la tige centrale avec un diamètre interne qui diminue augmente progressivement de l'extrémité proche du premier corps de chambre (31) jusqu'à l'autre extrémité proche du deuxième corps de chambre (32) ; ou dans un autre cas, la tige (2) est pourvue d'une tige centrale avec un diamètre interne à saut, la tige centrale à diamètre interne à saut et le manchon (2) entourent et forment le deuxième passage, le diamètre interne de la tige centrale à diamètre interne à saut augmente brusquement de l'extrémité proche du premier corps de chambre (31) jusqu'à l'autre extrémité proche du deuxième corps de chambre (32).

15. Mécanisme à tige d'amortissement à compensation automatique selon la revendication 13, dans lequel la tige centrale de la tige (1) est pourvue d'une première fente à changement progressif (14) dans la direction axiale, la première fente à changement progressif (14) et le manchon (2) entourent et forment le deuxième passage, la première fente à changement progressif (14) rétrécit progressivement de l'extrémité proche du premier corps de chambre (31) jusqu'à l'autre extrémité proche du deuxième corps de chambre (32) ; ou dans un autre cas, la tige centrale de la tige (1) est une deuxième fente à gradient (15) dans la direction axiale, la deuxième fente à gradient (15) et le manchon (2) entourent et forment le deuxième passage, la deuxième fente à gradient (15) rétrécit par gradient de l'extrémité proche du premier corps de chambre (31) jusqu'à l'autre extrémité proche du deuxième corps de chambre (32).

16. Mécanisme à tige d'amortissement à compensation automatique selon la revendication 13, dans lequel le filetage externe de la tige (1) est pourvu d'une troisième fente à changement progressif (16) dans la direction de filetage, la troisième fente à changement progressif (16) et le manchon (2) entourent et forment le deuxième passage, la troisième fente à changement progressif (16) rétrécit progressivement à la manière d'une vis de l'extrémité proche du premier corps de chambre (31) jusqu'à l'autre extrémité proche du deuxième corps de chambre (32).

17. Mécanisme à tige d'amortissement à compensation automatique selon la revendication 12 ou la revendication 13, dans lequel le deuxième passage est disposé entre le manchon (2) et le boîtier (3).

18. Mécanisme à tige d'amortissement à compensation automatique selon la revendication 17, dans lequel le boîtier (3) est pourvu d'un corps de chambre à changement progressif de diamètre interne, la paroi de chambre du corps de chambre à changement progressif de diamètre interne et le manchon (2) entourent et forment le deuxième passage, le diamètre interne du corps de chambre à changement progressif de diamètre interne rétrécit progressivement de l'extrémité proche du premier corps de chambre (31) jusqu'à l'autre extrémité proche du deuxième corps de chambre (32) ; ou dans un autre cas, le boîtier (3) est pourvu d'un corps de chambre avec un diamètre interne à saut, la paroi de chambre du corps de chambre avec un diamètre interne à saut et le manchon (2) entourent et forment le deuxième passage, le diamètre interne du corps de chambre avec un diamètre interne à saut diminue brusquement de l'extrémité proche du premier corps de chambre (31) jusqu'à l'autre extrémité proche du deuxième corps de chambre (32).

19. Mécanisme à tige d'amortissement à compensation automatique selon la revendication 17, dans lequel la paroi de chambre du corps de chambre du boîtier (3) est pourvue d'une quatrième fente à changement progressif (36) dans la direction axiale, la quatrième fente à changement progressif (36) et le manchon entourent et forment le deuxième passage, la quatrième fente à changement progressif (36) rétrécit progressivement de l'extrémité proche du premier corps de chambre (31) jusqu'à l'autre extrémité proche du deuxième corps de chambre (32) ; ou dans un autre cas, la paroi de chambre du corps de chambre du boîtier (3) est pourvue d'une cinquième fente à gradient (37) dans la direction axiale, la cinquième fente à gradient (37) et le manchon (2) entourent et forment le deuxième passage, la cinquième fente à gradient rétrécit par gradient de l'extrémité proche de la première chambre jusqu'à l'autre extrémité proche du deuxième corps de chambre (32).
